# FASCICULE DE BREVET EUROPEEN

(11) **EP 2 171 831 B1**
(45) Date de publication et mention de la délivrance du brevet: **15.06.2016**
(21) Numéro de dépôt: 08830734.3
(22) Date de dépôt: 11.07.2008
(51) Int. Cl.: H02K 21/14, H02K 1/14, H02K 7/116

(54) **MOTO-RÉDUCTEUR COMPORTANT UN MOTEUR ÉLECTRIQUE POLYPHASÉ COMPACT**
GETRIEBEMOTOR MIT EINEM KOMPAKTEN ELEKTRISCHEN MEHRPHASENMOTOR
GEAR MOTOR INCLUDING A COMPACT MULTIPLE-PHASE ELECTRIC MOTOR

(30) Priorité: 24.07.2007 FR 0705372
(43) Date de publication de la demande: 07.04.2010
(73) Titulaire: Moving Magnet Technologies (MMT), 25000 Besançon (FR)
(72) Inventeur: PRUDHAM, Daniel, F-25220 Thise (FR)
(74) Mandataire: IP Trust
(86) Numéro de dépôt international: PCT/FR2008/001022
(87) Numéro de publication internationale: WO 2009/034270

(56) Documents cités:
- EP-A- 1 244 200
- EP-A- 1 261 102
- EP-A- 1 560 314
- WO-A-97/23943
- DE-A1- 19 905 748
- FR-A- 2 844 351

## Description

La présente invention concerne un moto-réducteur, comportant un moteur électrique polyphasé, permettant de répondre à des cahiers des charges particulièrement exigeant en terme d'encombrement et de masse.

Dans le domaine industriel et automobile, le choix d'un moteur polyphasé et d'un réducteur se réalise en fonction de critères qui sont tout autant des critères de coûts, de durée de vie, mais également d'encombrement et de masse. Concernant l'encombrement, un grand nombre d'applications nécessitent de disposer d'un encombrement le plus réduit possible et pour cela les solutions d'intégration du moteur et du réducteur doivent être optimales. Un moto-réducteur selon l'état de la technique

est connu du document EP-A-1 261 102.

La présente invention a donc pour but de proposer un moto-réducteur, qui soit économique et robuste, adapté aux grandes séries, et comportant pour cela un moteur électrique polyphasé permettant une intégration facile avec un réducteur ou un système de transformation de mouvement, en respectant toutes les contraintes posées en terme de dimensions extérieures et de masse.

À cet effet, l'invention concerne un moto-réducteur comportant un moteur polyphasé selon la revendication 1.

Cette simplification du moteur permet en outre de simplifier la connectique du moteur en réduisant le nombre de bobines et en les regroupant dans un secteur angulaire réduit. Cela ne doit cependant pas nuire à la performance du moteur et la structure du stator, présentant des dents larges et des dents étroites, permet tout à la fois de garantir des couples résiduels faibles et d'optimiser le volume du cuivre.

L'invention sera mieux comprise à la lecture de la description qui suit, faisant référence aux dessins annexés où :
- la figure 1 représente une vue en coupe transversale du moteur d'un moto-réducteur selon l'invention,
- la figure 2 représente un moto-réducteur très plat selon l'invention,
- la figure 3 et la figure 4 représentent un moto-réducteur selon l'invention, comportant un premier étage droit de réduction et un deuxième étage à roue vis-sans-fin,
- la figure 5 représente un moto-réducteur selon l'invention comportant un seul étage de réduction constitué par un système roue vis-sans-fin.

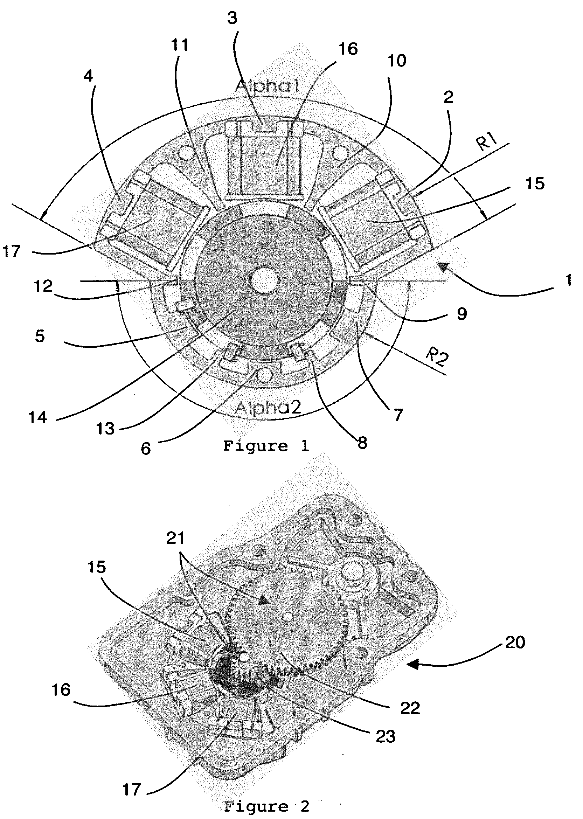

Le moteur du moto-réducteur selon l'invention, représenté en figure 1, comporte un stator (1) présentant 6 dents larges (2 à 7) et 6 dents étroites (8 à 13) et un rotor (14) présentant N paires de pôles (A1 à A10) aimantés radialement en sens alternés. Le stator (1) reprend une structure à 12 dents qui assure la meilleure constante de couple et utilise des dents larges (2 à 7) et des dents étroites (8 à 13) permettant de garantir un très faible couple résiduel par un choix judicieux des largeurs de pôles. Le rapport des largeurs entre dents larges (2 à 7) et dents étroites (8 à 13) est alors proche de 4.

Les bobinages (15 à 17) sont placés autour des dents larges (2 à 7) ce qui permet d'obtenir le maximum de couple par ampère-tour du moteur. Ce couple par ampère-tour est en effet fonction de la largeur de dent bobinée, mais est très peu influencé par la largeur des dents non bobinées pour autant que ces dernières ne présentent pas de saturation.

L'utilisation de pôles étroits pour les dents non bobinées permet de disposer d'une encoche (18) très large pour le passage du bobinage. La largeur (18) de cette encoche est supérieure à la largeur d'une dent étroite. Cette géométrie particulière de stator (1) permet donc de réaliser les bobines (15 à 17) séparément puis de venir les insérer dans le stator (1) autour des dents larges (2 à 7). De cette façon la longueur de bobinage, et donc le volume de cuivre, sont optimisés et les bobines (15 à 17) peuvent affleurer l'épanouissement polaire des dents ce qui minimise le flux de fuite.

La figure 2 montre un moto-réducteur (20) particulièrement plat qui comporte 3 bobinages (15 à 17) disposés à 60° l'un de l'autre pour la partie moteur et 2 étages droits de réduction (21) pour le réducteur. La roue (22) du premier étage de réduction engrène avec le pignon moteur (23) dans le secteur angulaire alpha-2 et de cette façon ne gêne nullement à la connexion des bobines (15 à 17). Cette intégration de la roue (22) dans la hauteur des bobinages permet d'obtenir un moto-réducteur (20) très plat.

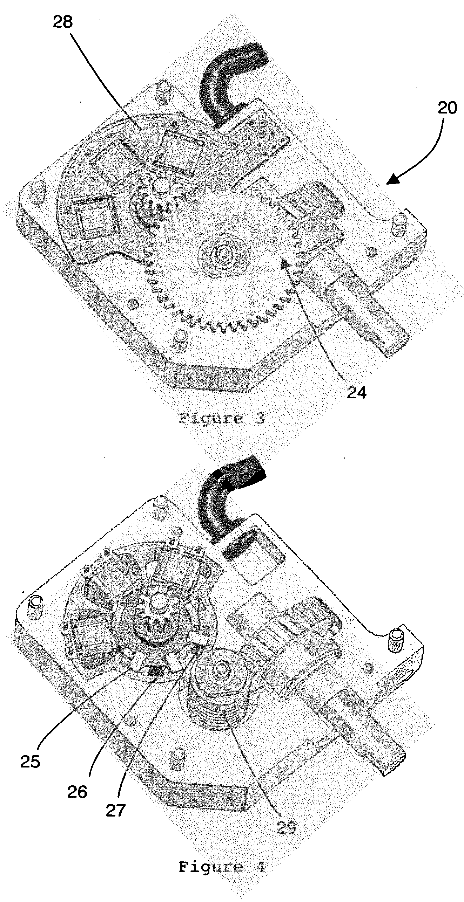

Les figures 3 et 4 montrent un moto-réducteur (20) comportant un premier étage de réduction droit (21), suivi d'un étage à roue vis-sans-fin (24). Des sondes de Hall (25 à 27) sont disposées dans le secteur alpha-2 et sont portées par un circuit imprimé (28) qui permet également de réaliser la connexion des bobines (15 à 17). La diminution de rayon entre R1 et R2 permet d'intégrer la vis du deuxième étage de réduction (29) dans un encombrement minimum.

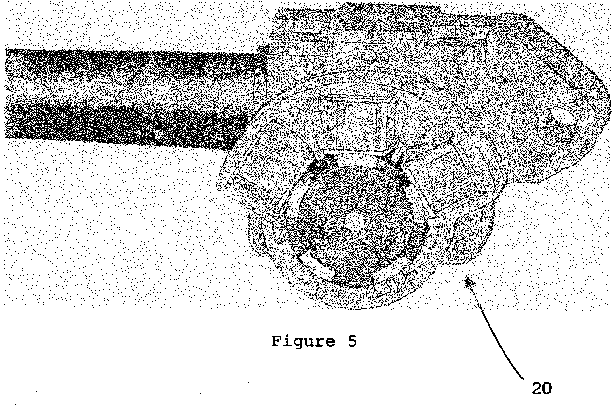

La figure 5 représente un moto-réducteur (20) comportant un seul étage de réduction constitué d'un système roue vis-sans-fin (24). Le moteur se trouve placé directement dans l'axe de la vis (29) du réducteur. La forme extérieure du moteur est mise à profit en disposant le secteur angulaire alpha-2, présentant un rayon R2 réduit, de manière à ce que le moteur déborde le moins possible du réducteur.

## Revendications

1. Moto-réducteur comportant un moteur électrique triphasé formé par une partie statorique excitée par des bobines électriques et par un rotor présentant N paires de pôles aimantés radialement en sens alternés, la partie statorique présentant 2 secteurs angulaires alpha-1, et alpha-2, de rayons respectifs R1 et R2 avec R1 différent de R2, comportant des dents larges et des dents étroites respectivement s'etendant radialement depuis une couronne annulaire, **caractérisé en ce que** les dents larges présentent une largeur supérieure ou égale au double de la largeur des dents étroites, **en ce que** la largeur d'encoche est supérieure à la largeur d'une dent étroite, **en ce que** le secteur angulaire alpha-1 est inférieur à 220° et comporte au moins trois bobinages.

2. Moto-réducteur électrique selon la revendication 1, dans lequel le moteur électrique est triphasé et la partie statorique est excitée par trois bobines électriques.

3. Moto-réducteur électrique selon la revendication 1, **caractérisé en ce que** N est égal à 5 ou à 7, et **en ce que** la partie statorique du moteur présente 6 dents larges et 6 dents étroites et est excitée par 3 bobinages placés à 60° l'un de l'autre,

4. Moto-réducteur électrique selon la revendication 1, **caractérisé en ce que en ce que** le rapport R1 sur R2 est compris entre 1.2 et 2.

5. Moto-réducteur électrique selon l'une des revendications précédentes, **caractérisé en ce qu'**il comporte des éléments de détection de position situés dans le secteur angulaire alpha-2 et agissant avec l'extrémité frontale du rotor.

6. Moto-réducteur électrique selon l'une des revendications précédentes, **caractérisé en ce que** la roue du premier étage de réduction est incluse dans la hauteur des bobinages.

## Patentansprüche

1. Getriebemotor mit einem elektrischen Drehstrommotor, der aus einem durch elektrische Spulen erregtem Statorteil und einem Rotor mit N Polteilen, die radial in wechselnder Richtung magnetisiert sind, gebildet wird, wobei das Statorteil die beiden Winkelsektoren alpha-1 und alpha-2 mit einem jeweiligen Radius von R1 und R2 umfasst, wobei R1 und R2 voneinander abweichen, welche breite Zähne und schmale Zähne jeweils umfassen, und sich radial von einem ringförmigen Kranz aus erstrecken, **dadurch gekennzeichnet, dass** die breiten Zähne größer/gleich der doppelten Breite der schmalen Zähne sind, und dadurch, dass die Spaltweite größer der Breite eines schmalen Zahns ist, **dadurch gekennzeichnet, dass** der Winkelsektor alpha-1 kleiner 220° ist und mindestens drei Wicklungen umfasst.

2. Elektrischer Getriebemotor nach Anspruch 1, in dem der elektrische Motor ein Drehstrommotor ist und das Statorteil durch drei elektrische Spulen erregt wird.

3. Elektrischer Getriebemotor nach Anspruch 1, **dadurch gekennzeichnet, dass** N gleich 5 oder 7 ist und das Statorteil des Motors 6 breite und 6 schmale Zähne aufweist und durch 3 Spulen, die jeweils in einem Winkel von 60° zueinander stehen, erregt wird.

4. Elektrischer Getriebemotor nach Anspruch 1, **dadurch gekennzeichnet, dass** das Verhältnis R1 zu R2 1,2 und 2 beträgt.

5. Elektrischer Getriebemotor nach einem der vorhergehen Ansprüche, **dadurch gekennzeichnet, dass** er im Winkelsektor alpha-2 Elemente zur Erkennung der Stellung aufweist, die mit dem vorderen Ende des Rotors zusammen wirken.

6. Elektrischer Getriebemotor nach einem der vorhergehenden Ansprüche, **dadurch gekennzeichnet, dass** das Rad der ersten Getriebestufe in der Höhe der Spulen enthalten ist.

## Claims

1. A gear motor including a three-phase electric motor formed by a stator portion excited by electric coils and by a rotor having N pairs of poles radially magnetized in alternating directions, with the stator portion including two angular sectors alpha-1 and alpha-2 with respective radii R1 and R2, with R1 being different from R2, comprising wide teeth and narrow teeth respectively, extending radially from an annular crown, **characterised in that** the wide teeth have a width greater than or equal to twice the width of the narrow teeth, **in that** the notch width is greater than the width of a narrow tooth, **in that** the angular sector alpha-1 is smaller than 220° and includes at least three coils.

2. An electric gear motor according to claim 1, wherein the electric motor is a three-phase one and the stator portion is excited by three electric coils.

3. An electric gear motor according to claim 1, **characterized in that** N is equal to 5 or 7, and **in that** the stator portion of the motor has 6 wide teeth and 6 narrow teeth and is excited by 3 coils positioned 60° away from each other.

4. An electric gear motor according to claim 1, **characterized in that** the R1/R2 ratio ranges from 1.2 to 2.

5. An electric gear motor according to one of the preceding claims, **characterized in that** it comprises position detecting elements located in the angular sector alpha-2 and acting with the front end of the rotor.

6. An electric gear motor according to one of the preceding claims, **characterized in that** the gear of the first reduction stage is included in the height of the coils.
